(19) Europäisches Patentamt
European Patent Office
Office européen des brevets

(11) **EP 1 625 996 A1**

(12) **DEMANDE DE BREVET EUROPEEN**

(43) Date de publication:
**15.02.2006 Bulletin 2006/07**

(51) Int Cl.:
**B62J 39/00** (2006.01)

(21) Numéro de dépôt: **05370023.3**

(22) Date de dépôt: **04.08.2005**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **11.08.2004 FR 0408819**

(71) Demandeur: **Chronoprint**
**59110 La Madeleine (FR)**

(72) Inventeur: **Weislo, Arnold**
**59000 Lille (FR)**

(74) Mandataire: **Hennion, Jean-Claude et al**
**Cabinet Beau de Lomenie,**
**27bis rue du Vieux Faubourg**
**59000 Lille (FR)**

(54) **Dispositif de vue vers l'avant pour cycle**

(57) L'invention se rapporte à un dispositif de vue vers l'avant pour cycle.

Il est caractérisé en ce qu'il comprend une caméra numérique de prise de vue (1) et un écran de visualisation (4) tous deux logés dans un boîtier monobloc (2) pourvu de moyens (8) de fixation sur le cadre ou la potence du cycle.

FIG.1

EP 1 625 996 A1

## Description

L'invention se rapporte au domaine technique des systèmes de vue vers l'avant pour véhicules sans habitacles ou pare-vent, dans lesquels au moins une personne est assise, notamment bicyclettes de ville, VTT, vélos de courses, tandem, cyclomoteurs. Dans le suite du texte, uniquement afin de simplification, il sera seulement fait référence au cycle ou vélo.

Une position aérodynamique du cycliste n'est pas compatible avec le fait que le cycliste regarde constamment la route ou la piste.

Or, la résistance de l'air est de loin la principale ennemie du cycliste : la puissance nécessaire pour vaincre les frottements et la gravité varie linéairement avec la vitesse alors que la résistance de l'air augmente comme le cube de la vitesse.

La puissance nécessaire au mouvement est en effet obtenue par le produit de la traînée $R_A$ par la vitesse v, la traînée évoluant en fonction du carré de la vitesse de déplacement (par rapport à l'air) :

$$R_A = \tfrac{1}{2}\, SC_x\, r\, v^2,$$

où $SC_x$ est le coefficient de résistance aérodynamique en $m^2$, r est la masse volumique de l'air en $kg . m^{-3}$, S est la surface caractéristique du corps.

Par exemple, un cycliste roulant à 30 km/h n'élève sa vitesse que de 9 km/h lorsqu'il développe une puissance double.

A vitesse identique, plus le SCx est petit et moins la puissance à fournir est élevée. A titre d'exemple, en 1972, Allan Abbot (USA) a parcouru 1 mile à 225,3 km/h avec un vélo de 30,5 m de développement et derrière un véhicule équipé d'un écran. Des modèles de cycles à Cx réduit ont été proposés (par exemple vélos couchés, cycle lunaire). Toutefois, la diffusion de ces cycles reste confidentielle, compte tenu notamment de leur prix.

La position du cycliste sur le vélo est ainsi très importante et fait l'objet de recherches très poussées en soufflerie.

Les résistances aérodynamiques sont dues à la viscosité de l'air et possèdent deux origines distinctes : la traînée de pression et la traînée de frottement.

Les filets d'air à proximité des parois du vélo en mouvement glissent en frottant les uns sur les autres. Ce phénomène fait apparaître une traînée dite de frottement qui représente une faible part dans les résistances totales. Toutefois, dans le cyclisme, l'utilisation de roues lenticulaires nécessite sa prise en compte.

La traînée de pression, qui représente l'essentiel des résistances aérodynamiques, provient de l'asymétrie entre les pressions qui règnent en amont et en aval du cycliste.

Si le cycliste incline la tête et se penche vers le guidon, pour réduire essentiellement cette traînée de pression, ses yeux se trouvent tournés vers le sol, et le cycliste ne regarde la route ou la piste que par intermittence, d'où des risques d'accident.

Par ailleurs, les mouvements de la tête du cycliste, et plus encore le maintien du regard tourné vers l'avant, entraînent des douleurs cervicales importantes, des tassements de vertèbres dorsales, cervicales ou lombaires et des contractions des trapèzes.

La résistance de l'air est un facteur important de limitation des performances, notamment pour les épreuves de vitesse et les descentes libres de côtes.

On connaît, dans l'état de la technique, quelques conceptions de tels systèmes de vue vers l'avant pour cycles.

Le document FR-A-1.019.160, publié en 1952, suggère un dispositif comprenant deux miroirs plans aux inclinaisons réglables, fixés sur un châssis, de préférence sur le haut du guidon. Ce dispositif n'est pas décrit dans sa structure ou son montage sur le guidon. Seul son principe, théorique, est schématisé sur les figures.

Les documents EP-A-0.518.549 et US-A-5.148.327 décrivent un système de miroirs pour voir vers l'avant pour une bicyclette, ce système comprenant deux petits miroirs plans de forme ovale montés articulés, les moyens d'articulation étant présentés comme un perfectionnement au dispositif décrit dans le document US-A-4.375.316.

On peut se référer également aux documents US-A-4.679.916, US-A-5.305.153, US-A-5.324.059, US-A-5.422.759.

Les systèmes décrits dans les documents antérieurs présentent de nombreux inconvénients.

Leur poids et encombrement sont souvent importants, de sorte qu'ils sont facteurs de gêne pour l'effort musculaire, les mouvements et les réflexes du cycliste.

L'image qu'ils permettent de percevoir n'est pas stable, du fait des secousses et trépidations du vélo. Elle est par ailleurs de taille réduite et déformée, de sorte que le cycliste ne peut correctement apprécier les distances et les dimensions des obstacles.

La présente invention vise à résoudre les inconvénients mentionnés ci dessus.

A cette fin, l'invention se rapporte, selon un premier aspect, à un dispositif comprenant un objectif de caméra numérique, un écran de visualisation de l'image prise par ladite caméra, des moyens de fixation sur le cadre d'un vélo ou véhicule analogue.

D'autres objets et avantages de l'invention apparaîtront au cours de la description suivante de modes de réalisation, description qui va être effectuée en se référant aux dessins annexés dans lesquels :

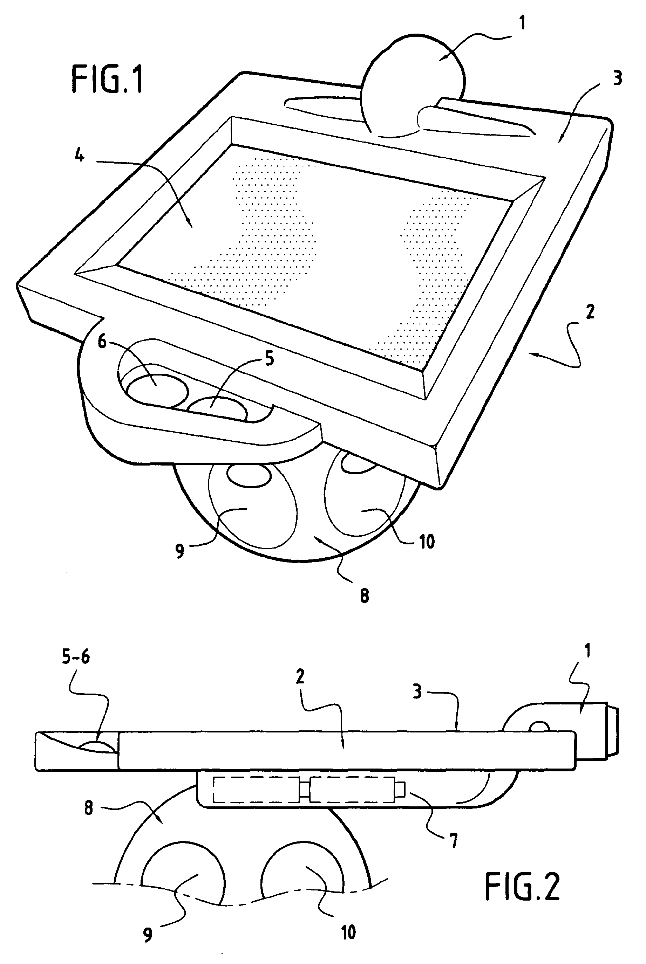

- la figure 1 est une vue en perspective d'un dispositif selon un mode de réalisation de l'invention ;
- la figure 2 est une vue latérale partielle du dispositif de la figure 1.

Ainsi qu'il apparaît sur les figures, le dispositif comprend un objectif de caméra numérique 1 monté à l'avant d'un boîtier 2 mince et plat de contour sensiblement rectangulaire, ce boîtier 2 étant pourvu, sur sa grande face supérieure 3 d'un écran 4 de visualisation de l'image prise en temps réel par l'objectif 1. L' écran de visualisation est de grande surface, sa diagonale étant par exemple de 8 pouces au moins. Dans une mise en oeuvre, cet écran est à cristaux liquides, la demanderesse ayant constaté que cet écran est de ce fait en lui même peu sensible aux vibrations et trépidations.

Le boîtier 2 est mince et sensiblement parallèle au sol, en position montée sur le vélo. Il n'offre ainsi pas de prise au vent élevée.

Les angles et bords du boîtier et de l'ensemble du dispositif sont arrondis de sorte à limiter les risques de blessure en cas de choc ou de chute.

Le dispositif est avantageusement réalisé avec un capotage résistant aux chocs et étanche. Un revêtement anti-reflet et anti-rayures peut être mis en place sur l'écran 4.

Le dispositif est pourvu de boutons 5 de réglage de la luminosité de l'écran 4 et d'un bouton marche/arrêt, intégré au boîtier.

Le boîtier loge avantageusement un compartiment pour accumulateur ou piles 7, placée en face inférieure du boîtier 2, ce logement étant plat et mince, de sorte à ne pas offrir de prise au vent importante. En variante, des câbles conducteurs relient le boîtier à une source d'alimentation externe, portée par exemple par le cycliste lui même ou fixé au cadre du vélo.

Le cas échéant, le dispositif sera pourvu d'une fonction de stockage d'images.

Ainsi qu'il apparaît sur les figures, le boîtier est monobloc et pourvu de moyens 8 de fixation sur le cadre ou la potence de vélo, ledit boîtier logeant la caméra numérique de prise de vue 1 et l'écran de visualisation 4.

Dans la réalisation représentée, ces moyens comprennent une pièce arrondie pourvue d'un trou central axial et de deux trous traversant de passage de moyens de vissage 9,10

Cette pièce arrondie est avantageusement réalisé en un matériau amortissant les vibration tel qu'élastomère ou silicone.

**Revendications**

1. Dispositif de vue vers l'avant pour cycle **caractérisé en ce qu'**il comprend une caméra numérique de prise de vue (1) et un écran de visualisation (4) tous deux logés dans un boîtier monobloc (2) pourvu de moyens de fixation sur le cadre ou la potence du cycle.

2. Dispositif selon la revendication 1, **caractérisé en ce que** l'écran est à cristaux liquides.

FIG.1

FIG.2

**Office européen des brevets**

**RAPPORT DE RECHERCHE EUROPEENNE**

Numéro de la demande

EP 05 37 0023

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DE 203 19 228 U1 (K.W. HOCHSCHORNER GMBH) 4 mars 2004 (2004-03-04) * alinéa [0030] - alinéa [0031]; figure 1 * | 1,2 | B62J39/00 |
| A | US 2004/143373 A1 (ENNIS TIMOTHY JAMES) 22 juillet 2004 (2004-07-22) * figure 6 * | 1,2 | |
| A | DE 38 37 185 A1 (HERBERT, LUDWIG, DIPL.-ING., 6845 GROSS-ROHRHEIM, DE) 3 mai 1990 (1990-05-03) * figure 20 * | 1 | |

DOMAINES TECHNIQUES RECHERCHES (IPC)

B62J
B62K

Le présent rapport a été établi pour toutes les revendications

| Lieu de la recherche | Date d'achèvement de la recherche | Examinateur |
|---|---|---|
| Munich | 8 novembre 2005 | Feber, L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 05 37 0023

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-11-2005

| Document brevet cité au rapport de recherche | | Date de publication | Membre(s) de la famille de brevet(s) | | Date de publication |
|---|---|---|---|---|---|
| DE 20319228 | U1 | 04-03-2004 | AUCUN | | |
| US 2004143373 | A1 | 22-07-2004 | AU | 2003291094 A1 | 15-06-2004 |
| | | | WO | 2004046886 A2 | 03-06-2004 |
| DE 3837185 | A1 | 03-05-1990 | AUCUN | | |

Pour tout renseignement concernant cette annexe : voir Journal Officiel de l'Office européen des brevets, No.12/82